# EUROPÄISCHE PATENTSCHRIFT

(11) **EP 0 428 478 B1**
(45) Veröffentlichungstag und Bekanntmachung des Hinweises auf die Patenterteilung: **30.11.1994**
(21) Anmeldenummer: 90810833.5
(22) Anmeldetag: 31.10.1990
(51) Int. Cl.: C22B 9/02, C22B 21/06, B22C 9/08, B01D 39/00

(54) **Keramischer Filterkörper mit Vorheiz-Indikator**
Ceramic Filterbody with indicator for preheating
Filtre céramique avec indicateur de préchauffage

(30) Priorität: 02.11.1989 US 430595
(43) Veröffentlichungstag der Anmeldung: 22.05.1991
(73) Patentinhaber: SELEE SA, CH-3960 Sierre (CH)
(72) Erfinder: Tadayon, Fereshteh, Hendersonville, NC 28803 (US)
(74) Vertreter: Eyles, Winifred Joyce

(56) Entgegenhaltungen:
- DE-A- 2 534 668
- US-A- 4 690 763
- ODERN CASTING, Band 76, Nr. 3, März 1986, Des Plaines, IL (US); A.M.ARZT,Seiten 24-27 #

## Beschreibung

Die vorliegende Erfindung betrifft ein keramischer Filterkörper und im besonderen ein keramischer Schaumfilterkörper der einen eingebauten Vorheizindikator aufweist und ein Verfahren für die Herstellung des Körpers. Der Indikator wird vorwiegend für Anwendungen zum Filtration von geschmolzenen Metallen angewendet, um anzuzeigen, dass der Filter auf die gewünschte Temperatur vorgeheizt ist, so dass die Filtration des geschmolzenen Metalles eingeleitet werden kann.

Die Verwendung von thermographischen Indikatoren auf der Oberfläche von keramischen Körpern für Anwendungszwecke wie z. B. die Bestimmung der Temperaturverhältnisse in Öfen oder die thermisch vorhandene Effekte in elektronischen Bauelementen wird in DE-A-25 34 668 beschrieben.

Keramische Filterkörper werden kommerziell zur Filtration von geschmolzenem Metall, wie z.B. geschmolzenem Eisen und geschmolzenem Aluminium, schon seit einiger Zeit eingesetzt. Die US-Patentschriften 3,893,917 und 3,947,363, 4,081,371 und 4,331,621 beschreiben einige dieser Keramikkörper die zur Filtration von geschmolzenem Metall angewendet werden können.

Solche Keramische Filterkörper werden üblicherweise vorgeheizt, bevor die Filtration des geschmolzenen Metalles eingeleitet wird, um den Filterkörper vor einem thermischen Schock zu schützen und um die den Filter umgebenden Dichtungsmaterialien zu expandieren. Ungenügend beheizte Filter können zu folgenden Problemen führen:
1. Seitlicher Metalldurchtritt am Filter vorbei, wegen unvollständiger Expansion der wärme quellfähigen Dichtung.
2. Brechen des Filters wegen thermischem Schock.
3. Einfrieren der Metallschmelze wegen eines kalten Filterkörpers, der mit einer Schmelze nahe ihres Erstarrungspunktes beaufschlagt wird.
4. Bruch des Filters in Fällen einer ungleichen Filterauflage und ungleichen Druckes auf den Filter, ausgelöst durch einen höheren als üblichen Metallüberstand über dem Filter, der durch den Versuch verursacht wird, durch einen kalten Filter hindurch zu filtrieren; und
5. Einführen von Wasserstoffionen in die Metallschmelze durch gasförmige Dichtungs-Beiprodukte.

Das Vorheizen, falls korrekt ausgeführt, kann diese Probleme minimalisieren und den Weg für eine saubere, effiziente Filtration freimachen. Dieses klare Ziel wird nicht immer in befriedigendem Masse erreicht. Zum Beispiel können die Brenner den Filter nicht auf die gewünschte Temperatur aufheizen, z.B. wegen Uneffizienz der Brenner oder die Brenner können den Filter nicht gleichmässig durch seine Ausdehnung hindurch aufheizen.

Bis jetzt ist noch kein Filterkörper bekannt geworden, der einen Mechanismus einer Anzeige eines Typs aufweist, der anzeigt, dass die Filterkörper genügend vorgeheizt sind und die Filtration beginnen kann. Die vorliegende Erfindung überwindet diesen Nachteil durch das Merkmal eines keramischen Filterkörpers für den Gebrauch zum Filtrieren von geschmolzenem Metall mit einem daran angebrachten Vorheiz-Indikator laut Anspruch 1. Bevorzugte Ausführungsformen des Filterkörpers nach Anspruch 1 sind in den Unteransprüchen beschrieben. Ein Verfahren zur Herstellung eines keramischen Schaumfilterkörpers mit einem Vorheiz-Indikator ist Gegenstand der Ansprüche 7 bis 10.

Entsprechend ist es ein Merkmal vorliegender Erfindung einen Vorheiz-Indikator für keramische Filterkörper für geschmolzene Metalle zur Verfügung zu stellen, der anzeigt, dass der Keramikkörper auf die gewünschte Temperatur vorgeheizt ist.

Es ist ein weiterer Gegenstand vorliegender Erfindung einen Vorheiz-Indikator, wie oben, zur Verfügung zu stellen, der anzeigt, dass der Körper im wesentlichen gleichmässig über seine Ausdehnungen aufgeheizt ist.

Es ist noch ein weiterer Gegenstand vorliegender Erfindung, einen Vorheiz-Indikator, wie oben, zur Verfügung zu stellen, der relativ einfach an einem keramischen Filter anzubringen und zu gebrauchen ist.

Diese und weitere Gegenstände und Vorteile werden offensichtilcher durch nachfolgende Beschreibung und Zeichnungen in welcher Referenzzahlen die entsprechenden Elemente bezeichnen.

Die vorgenannten Gegenstände und Fortschritte werden durch einen keramischen Körper mit einen eingebauten Vorheizindikator erreicht der ein indizierendes Material wie ein Farbstoff mit Verbrenntemperatur im wesentlichen gleich des Temperatures auf welche der keramischer Körper vor dem Gebrauch aufgeheizt wird, aufweist. Die hier beschriebene Erfindung findet insbesondere Verwendung an keramischen Körpern, angewendet in der Filtration von geschmolzenen Metallen.

In einer bevorzugten Ausführungsform umfasst der Vorheizindikator einen Anilin-Farbstoff, angebracht an einer Stelle oder an einer Mehrzahl von Stellen auf der Oberfläche des keramischen Körpers. Mit dem Aufheizen des keramischen Körpers auf die gewünschte Temperatur bleicht der Farbstoff aus oder verschwindet. Wenn er komplett unsichtbar oder verschwunden ist, weisst der Anwender, dass der Körper auf die gewünschte Temperatur aufgeheizt ist. Der Farbstoff wird bevorzugt an einer Mehrzahl von Stellen auf der Oberfläche des Körpers angebracht, um anzuzeigen, wann der Körper im wesentlichen gleichmässig auf die gewünschte Temperatur aufgeheizt ist.

Bevorzugt wird der Vorheizindikator an der Oberfläche des Körpers angebracht, welche die Einlassoberfläche durch welche geschmolzenes Metall zum Filtrieren in diesen Körper eintritt.

Der Indikatorfarbstoff wird auf den keramischen Körper aufgebracht durch Herstellen einer wässrigen Lösung, enthaltend von 0,01 g/l bis 30 g/l des Farbstoffes, eintauchen eines Stempelwerkzeuges in besagte Lösung und auftragen eines Abdruckes des Farbstoffes an einem oder mehreren Stellen auf dem Keramikkörper durch Anwendung des besagten Werkzeuges. Zweckmässig wird eine Schablone zur Bestimmung der Stelle oder der Stellen, an denen der Farbstoff aufgetragen werden soll, angewendet.
Figur 1 ist eine perspektivische Ansicht eines keramischen Filterkörpers mit dem Vorheiz-Indikator nach vorliegender Erfindung, und
Figur 2 stellt eine Schablone zur Positionierung des Vorheiz-Indikators dar.

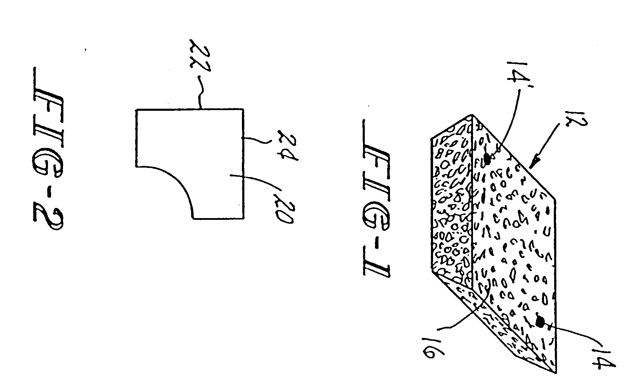

Poröse Keramikkörper werden aufgrund ihrer ausgezeichneten thermischen und mechanischen Eigenschaften zur Filtration von geschmolzenem Metall angewendet. Filter, wie Filterkörper 12 gemäss Figur 1 werden üblicherweise durch ein Replizierverfahren, welches in seiner einfachsten Form das Eintauchen eines porösen brennbaren Schaummaterials, wie Polyurethanschaum, in einen thixotropen keramischen Schlicker und Brennen des imprägnierten Schaummaterials, um das Schaummaterial auszubrennen und einen porösen Keramikkörper herzustellen, umfasst, hergestellt. Die US-Patentschriften 3,947,363, 4,024,212, 4,254,659, 4,391,981 und 4,610,832 beschreiben geeignete Verfahren zur Herstellung von keramischen Filterkörpern für die Verwendung zum Filtrieren von geschmolzenem Metall, wie geschmolzenem Aluminium, geschmolzenem Eisen und geschmolzenem Stahl. Diese keramischen Körper sind typischerweise charakterisiert durch eine offene Zellstruktur mit einer Vielzahl von untereinander verbundenen Hohlräumen, die mit Stegen aus keramischem Material umgeben sind.

Wie vorgängig beschrieben, werden Filterkörper für geschmolzenes Metall, typischerweise vor Beginn des Flusses des geschmolzenen Metalles durch den Filter, vorgeheizt. Es wurde gefunden, dass das Vorheizen der Keramikkörper die Körper vor einem thermischen Schock schützt und zur vollen Expansion von bestimmten Dichtungsmaterialien, welche die Peripherie der Filter umgeben, mithelfen. Die US-Patent-Anmeldung US-Serial Nr. 356,076 beschreibt ein solches expandierbares Dichtungsmaterial.

Das Vorheizen kann mit allen an sich bekannten Vorrichtungen, wie Brennern, Gasbrenner etc, ausgeführt werden. Die Temperatur, auf welche der Körper vorgeheizt wird, hängt von Typ des zu filtrierenden Metalles ab. Für geschmolzenes Aluminium wird der Körper typischerweise auf eine Temperatur im Bereich von 200°C bis 650°C während einer Zeit im Bereich von 5 Minuten bis 30 Minuten vorgeheizt.

Beispielsweise wird das Vorheizen des Filterkörpers in Einbaulage durchgeführt. Die Wärmequelle beaufschlagt den Filterkörper zweckmässig auf der Auslassunterseite durch welche beim nachfolgenden Filtriervorgang das geschmolzene, filtrierte Metall aus dem Körper austritt. Die durch die Vorheiz-Vorrichtung erzeugte Wärme kann dann durch den Filterkörper oder porösen Keramikkörper hindurchtreten. Der Körper, an der Einlassoberfläche, durch welche das geschmolzene Metall beim nachfolgenden Filtriervorgang zum Filtrieren in diesen Körper eintritt, ist mit mindestens einem Vorheiz-Indikator versehen, der anzeigt, dass und wann der Körper durchgehend die gewünschte Temperatur erreicht hat.

Die wichtigsten Voraussetzungen für sauberes Vorheizen sind die Wahl von Temperatur und Zeit. Zur Absicherung, dass diese zwei Voraussetzungen richtig gewählt werden, macht vorliegende Erfindung Gebrauch von einem sichtbaren Indikatormaterial 14 mit einer Verbrennungstemperatur, die der korrekten Filtervorheiztemperatur enstpricht. Deshalb, wen der Filter auf die richtige Temperatur erhitzt worden ist,
oxidiert das Indikatormaterial und verbrennt. Wenn der Filter richtig vorgeheizt ist, ist das Material 14 nicht mehr länger sichtbar.

Es wurde gefunden, dass ein geeignetes Indikator-Material eine wässrige Anilinfarbstofflösung, enthaltend von 0,01 g/l bis 30 g/l, vorzugsweise von 0.06 g/l bis 3.0 g/l, des Farbstoffes enthält. Anilinfarbstoffe sind in Pulverform und können in der Regel leicht mit Wasser gemischt werden. Für Filterkörper für geschmolzenes Aluminium, wurde gefunden, dass Backmeier's Kristallviolett ein besonders geeignetes Farbstoffmaterial ist, da es bei einer Temperatur im Bereich von etwa 200° C bis 650° C abbrennt.

Der Farbstoff ist zweckmässig auf der Oberfläche 16 der Einlassseite für das geschmolzene Metall des Filterkörpers 12 angebracht, um den Indikator 14 zu bilden. Der Indikator 14 kann beispielsweise in Form von einem oder mehreren Punkten, Quadraten oder einem oder mehreren Streifen oder sinngemäss ähnlichen Mustern sein. Vorzugsweise umfasst der sichtbare Indikator zwei Punke 14 und 14' an gegenüberliegenden Ecken der Oberfläche 16 angeordnet. Durch diese Anordung der Punkte 14 and 14', an gegenüberliegenden Ecken kann man einen visuellen Hinweis erhalten, dass der Filterkörper im wesentlichen durch die gesamte Ausdehnung hindurch auf die gewünschte Temperatur vorgeheizt ist.

Die Punkte können durch die Verwendung eines Stempelwerkzeuges, das nicht gezeigt ist, bestehend aus einer zylindrischen Spitze aus Schwamm-Material, das seinerseits an einen hölzenen Handgriff geklebt ist, auf der Oberfläche 16 angebracht werden. Das Schwamm-Material der Spitze kann z.B. ein 50 ppi Polyurethanschwammmaterial mit 2.54 cm Durchmesser und beliebiger Länge sein. Die Spitze kann durch einen an sich bekannten Klebstoff an dem Handgriff angebracht werden.

Eine Schablone 20 wie diese in Figur 2 gezeigt ist, kann verwendet werden um die gewünschte Position für den Punkt zu bezeichnen. Die Schablone kann aus klarem Kunststoffmaterial hergestellt sein, mit einem bezeichneten Punkt, z.B. 5 cm von der Ecke des Filters für den Indikatorpunkt.

Um die gewünschte Position für den Punkt 14 oder 14' anzuzeichnen wird die Schablone 20 an der Ecke der Oberfläche 16 mit den geraden Kanten 22 und 24 bündig mit den Kanten des Filterkörpers gemacht. Die Schwammspitze des Stempelwerkzeuges wird dann mit dem Farbstoff durch Eintauchen in die Indikatorlösung imprägniert. Die Punkte 14, 14' werden durch aufdrücken der imprägnierte Spitze am vorgesehenen Ort auf dem Filter angebracht. Die Schritte werden auf der gegenüberliegenden Seite des Filters wiederholt, um den anderen Punkt anzubringen. Es ist bevorzugt zwei Punkte anzubringen. Es ist jedoch offensichtlich, dass die Filteroberfläche mit jeder gewünschten Zahl von Punkten an jeder beliebigen Stelle bedruckt werden kann.

Das Aufbringen des Indikators kann auch automatisiert werden, indem bei einem fliessbandmässigen Durchlauf der Filter durch eine Indikatorauftrag-Vorrichtung z.B. durch taktmässiges Stempeln oder durch Abrollen einer mit Stempeln versehenen Trommel oder Walze das Indikator-Muster aufgebracht wird.

Wie vorstehend erwähnt, wird der Farbstoff, der die Indikatoren 14 und 14' bildet, oxidiert und brennt weg, wenn der Filterkörper beheizt wird. Wenn die gewünschte Vorheiztemperatur erreicht worden ist, verschwinden die Markierungen 14, 14' oder bleichen aus geben dem Anwender das Zeichen die Filtration des geschmolzenen Metalls zu starten.

Es muss deutlich gemacht werden, dass andere Farbstoffe mit anderen Verbrennungstemperaturen in der angegebenen Indikator-Lösung verwendet werden können. Zum Beispiel würde man einen Farbstoff mit einer Verbrennungstemperatur im Bereich von ca. 540° C bis ca. 1600° C anwenden, wenn der Filterkörper für die Filtration von geschmolzenen Stahl gebraucht würde.

Der Vorheiz-Indikator nach vorliegender Erfindung kann beispielsweise auch aus Materalien gewählt werden, welche nicht verbrennen oder ausbleichen, sondern die Farbe wechseln oder andere optisch erkennbare Aenderungen durchlaufen .

## Patentansprüche

1. Keramischer Filterkörper für den Gebrauch zum Filtrieren von geschmolzenem Metall mit einem daran angebrachten Vorheiz-Indikator, wobei der Filterkörper einen Körper der gewünschten Form als poröser keramischer Körper mit Serien von untereinander verbundenen Hohlräumen, wobei der Körper eine Einlassoberfläche durch welche geschmolzenes Metall zum Filtrieren in diesem Körper eintritt und mindestens einen Vorheiz-Indikator, angebracht an dieser Oberfläche aufweist, um anzuzeigen, wann der Köper, der vor der Filtration vorgeheizt wird, die gewünschte Temperatur erreicht hat, enhält.

2. Keramischer Filterkörper gemäss Anspruch 1, enthaltend wenigstens einen Vorheiz-Indikator in Form wenigstens eines Punktes eines Farbstoffes mit einer Verbrennungstemperatur im wesentlichen der gewünschten Vorheiztemperatur entsprechend.

3. Keramischer Körper gemäss Anspruch 2, wobei der Farbstoff eine Verbrennungstemperatur im Bereich von 200°C bis 650°C aufweist.

4. Keramischer Körper gemäss Anspruch 3, wobei der Farbstoff einen Anilinfarbstoff enthält oder daran besteht.

5. Keramischer Körper gemäss Anspruch 4, wobei der Farbstoff Backmeier's Kristall Violett enthält oder daraus besteht.

6. Keramischer Körper gemäss Anspruch 2, wobei mindestens zwei Punkte des Farbstoffes an gegenüberliegenden Ecken des Filterkörpers angebracht sind, um anzuzeigen, dass die Filterkörper im wesentlichen gleichmässig durch die ganze Stärke der keramischen Körper hindurch auf die gewünschte Temperatur vorgeheizt sind.

7. Verfahren zur Herstellung eines keramischen Schaumfilterkörpers mit einem Indikator zur Anzeige, dass die gewünschte Vorheiztemperatur erreicht ist, wobei das Verfahren die Schritte enthält, Herstellen eines keramischen Körpers mit einer Vielzahl von miteinander verbunden Hohlräumen und Aufbringen eines Indikators, gebildet aus einem Farbstoff mit einer Verbrennungstemperatur im wesentlichen entsprechend der Vorheiztemperatur, auf der Oberfläche des porösen keramischen Körpers.

8. Verfahren nach Anspruch 7, wobei der Schritt des Aufbringens das Herstellen einer Indikatorlösung mit einer Verbrennungstemperatur im Bereich von ca. 200°C bis 650°C; Eintauchen einer Spitze eines Stempelwerkzeuges in die Indikator-Lösung und Aufdrücken der Spitze auf die Oberfläche an der bezeichneten Stelle umfasst.

9. Verfahren nach Anspruch 8, wobei der Schritt des Aufbringens im weiteren das Aufdrücken der Spitze auf der Oberfläche an einem zweiten bezeichneten Punkt auf der gegenüberliegenden Seite der Oberfläche umfasst.

10. Verfahren nach Anspruch 8, worin der Herstellungsschritt die Bildung einer wässrigen Lösung enthaltend von 0.01 g/l bis 30 g/l eines Anilinfarbstoffes, vorzugsweise Backmeier's Kristall Violett, umfasst.

## Claims

1. Ceramic filter body for use in the filtration of molten metal, having a preheating indicator fitted thereto, the filter body comprising a body of the desired shape as a porous ceramic body with series of mutually connected cavities, the body having an inlet surface, through which molten metal enters this body for filtration, and at least one preheating indicator, fitted to this surface, in order to indicate when the body, which is preheated before the filtration, has reached the desired temperature.

2. Ceramic filter body according to Claim 1, containing at least one preheating indicator in the form of at least one point of a dye having a combustion temperature substantially corresponding to the desired preheating temperature.

3. Ceramic body according to Claim 2, wherein the dye has a combustion temperature in the range from 200°C to 650°C.

4. Ceramic body according to Claim 3, wherein the dye contains an aniline dye or consists thereof.

5. Ceramic body according to Claim 4, wherein the dye contains Backmeier's crystal violet or consists thereof.

6. Ceramic body according to Claim 2, wherein at least two points of the dye are fitted to opposite corners of the filter body, in order to indicate that the filter bodies have been preheated to the desired temperature substantially uniformly throughout the entire thickness of the ceramic bodies.

7. Process for making a ceramic foam filter body with an indicator for indicating that the desired preheating temperature has been reached, the process comprising the steps of making a ceramic body with a multiplicity of mutually connected cavities and applying an indicator, formed from a dye having a combustion temperature essentially corresponding to the preheating temperature, to the surface of the porous ceramic body.

8. Process according to Claim 7, wherein the step of applying comprises the preparation of a solution of an indicator having a combustion temperature in the region from about 200°C to 650°C, dipping of a tip of a stamping tool into the indicator solution and pressing the tip onto the surface at the marked spot.

9. Process according to Claim 8, wherein the step of applying furthermore comprises pressing the tip onto the surface at a second marked point on the opposite side of the surface.

10. Process according to Claim 8, wherein the preparation step comprises the formation of an aqueous solution containing from 0.01 g/l to 30 g/l of an aniline dye, preferably Backmeier's crystal violet.

## Revendications

1. Corps de filtration en céramique à utiliser dans la filtration de métal en fusion, muni d'un indicateur de préchauffage, le corps de filtration comprenant un corps de la forme souhaitée, comme un corps en céramique poreux, muni d'une série de cavités reliées entre elles, le corps possédant une surface d'entrée à travers laquelle le métal en fusion pénètre ce corps pour la filtration, et au moins un indicateur de préchauffage, placé sur cette surface, afin d'indiquer quand le corps, qui est préchauffé avant la filtration, a atteint la température souhaitée.

2. Corps de filtration en céramique selon la revendication 1, contenant au moins un indicateur de préchauffage sous forme d'au moins un point d'un colorant ayant une température de combustion correspondant sensiblement à la température de préchauffage souhaitée.

3. Corps en céramique selon la revendication 2, dans lequel le colorant possède une température de combustion dans la gamme de 200°C à 650°C.

4. Corps en céramique selon la revendication 3, dans lequel le colorant contient un colorant aniline ou est constitué d'un colorant aniline.

5. Corps en céramique selon la revendication 4, dans lequel le colorant contient du violet cristal de Backmeier ou consiste en du violet cristal de Backmeier.

6. Corps en céramique selon la revendication 2, dans lequel au moins deux points du colorant sont placés sur les coins opposés du corps de filtration, afin d'indiquer que les corps de filtration ont été préchauffés à la température souhaitée de manière sensiblement uniforme sur toute l'épaisseur des corps en céramique.

7. Procédé de fabrication d'un corps de filtration en mousse de céramique muni d'un indicateur pour indiquer que la température de préchauffage souhaitée a été atteinte, le procédé comprenant les étapes qui consistent à fabriquer un corps en céramique possédant une multiplicité de cavités reliées entre elles et à appliquer un indicateur, formé à partir d'un colorant ayant une température de combustion correspondant essentiellement à la température de préchauffage, sur la surface du corps en céramique poreux.

8. Procédé selon la revendication 7, dans lequel l'étape d'application comprend la préparation d'une solution d'un indicateur ayant une température de combustion dans la gamme d'environ 200°C à 650°C, le trempage d'un bout d'un outil d'estampage dans la solution d'indicateur et le pressage du bout sur la surface à l'endroit marqué.

9. Procédé selon la revendication 8, dans lequel l'étape d'application comprend, en outre, le pressage du bout sur la surface en un second point marqué, situé sur le côté opposé de la surface.

10. Procédé selon la revendication 8, dans lequel l'étape de préparation comprend la formation d'une solution aqueuse comprenant de 0,01 g/l à 30 g/l d'un colorant aniline, de préférence du violet cristal de Backmeier.
